# EUROPÄISCHE PATENTSCHRIFT

(11) **EP 0 444 007 B1**
(45) Veröffentlichungstag und Bekanntmachung des Hinweises auf die Patenterteilung: **01.12.1993**
(21) Anmeldenummer: 91890016.8
(22) Anmeldetag: 28.01.1991
(51) Int. Cl.: F16K 7/14, F16K 31/02, F16K 31/08

(54) **Elektromagnetisch betätigbares Ventil**
Electromagnetic actuated valve
Soupape à commande électromagnétique

(30) Priorität: 19.02.1990 AT 382/90
(43) Veröffentlichungstag der Anmeldung: 28.08.1991
(73) Patentinhaber: AVL Medical Instruments AG, 8207 Schaffhausen (CH)
(72) Erfinder: Kleinhappl, Erich, Ing., A-8062 Weinitzen (AT)
(74) Vertreter: Krause, Walter, Dr. Dipl.-Ing.

(56) Entgegenhaltungen:
- EP-A- 0 230 150
- EP-A- 0 373 142
- WO-A-85/05657
- WO-A-88/01705
- DE-A- 2 117 273
- DE-A- 2 228 760
- DE-A- 2 810 567
- DE-A- 3 311 104
- DE-A- 3 447 329
- DE-A- 3 725 590
- DE-B- 1 450 540
- GB-A- 1 064 678
- GB-A- 1 417 226
- GB-A- 2 103 391
- US-A- 3 812 398
- US-A- 4 231 287
- US-A- 4 304 391
- US-A- 4 383 234
- US-A- 4 505 451
- US-A- 4 832 582

## Beschreibung

Die Erfindung betrifft ein Ventil, bestehend aus einer Betätigungsvorrichtung, einem beweglichen, elektromagnetisch betätigbaren Kolben mit einer stabilen Endlage und einer Ventilkammer mit einer Öffnung für das durchströmende Medium, welche durch den Kolben verschließbar ist, sowie einer die Ventilkammer gegen die Betätigungsvorrichtung und den beweglichen Kolben völlig abdichtenden im wesentlichen scheibenförmig ausgebildeten flexiblen Membran, die gehäusefest an ihrem Umfang eingespannt ist und vom beweglichen Kolben gegen den Rand der Öffnung drückbar ist.

Der Einsatzbereich solcher Ventile liegt im allgemeinen bei feststoffbeladenen oder agressiven Medien, beispielsweise Schmutzwasser.

Aus der DE-OS 37 25 590 ist ein Ventil der eingangs genannten Art bekannt. Die stabile Lage des Kolbens in der Schließstellung wird dabei durch eine die volle Schließkraft aufbringende Feder erreicht. Die zweite Endlage des Kolbens wird durch einen Elektromagneten bewirkt, welcher während dieser Öffnungsstellung ständig eingeschaltet sein muß, was sich nachteilig auf den Energieverbrauch auswirkt. Wegen dem vom magnetischen Fluß zu überbrückenden Luftspalt zwischen der Polfläche des Kolbens und dem Widerlager des Magnetkopfes muß der Elektromagnet relativ groß dimensioniert sein.

Aus der US-A 3,812.398 ist ein Ventil bekannt, dessen Kolben und dessen Betätigungsvorrichtung gegenüber dem Abwasser mittels einer Membran abgedichtet sind. Die Membran besitzt dabei die Form eines Faltenbalges, der den Kolben teilweise in axialer Richtung umhullt. Da diese Membran vollständig im Flüssigkeitsstrom liegt, sind bei dieser Ausführungsform Stützringe erforderlich, um ein kollabieren des Balges zu verhindern. Eine solche Membran stellt daher einen aufwendigen, teuren und fehleranfälligen Bauteil dar. Außerdem kommt es bei stark verschmutzten Medien zu Verkrustungen im Bereich der Falten, was zu einer weiteren Beeinträchtigung der Funktionsfähigkeit und zu erhöhtem Verschlei führt.

Weiters ist aus der EP-A 0 373 142 ein Schlauchventil bekannt, das von einem bistabilen Magnet betätigt wird. In diesem Falle ergeben sich bei verschmuzten Medien keinerlei Probleme, da das Medium innerhalb des geschlossenen Schlauches verbleibt. Um jedoch ein volles Absperren des Ventiles auch bei mittleren Drücken von bis zu 10 bar zu gewährleisten, sind bei solchen Ventilen relativ große Halte- und Schließkräfte erforderlich. Dies bedingt einerseits einen großen, schweren und daher aufwendigen Magnet und andererseits einen relativ großen Energieverbrauch beim Umschalten.

Aufgabe der Erfindung ist es, die oben beschriebenen Nachteile zu vermeiden und ein elektromagnetisch betätigbares Ventil zu schaffen, das auch für verschmutze Medien geeignet ist und einen möglichst geringen Energieverbrauch beim Schalten aufweist.

Diese Aufgabe wird erfindungsgemäß dadurch gelöst, daß ein Permanentmagnet vorgesehen ist, der den Kolben in einer zweiten stabilen Endlage hält, wobei dieser Kolben zusätzlich zu einer Polfläche an einer dem Permanentmagnet zugewandten Stirnseite eines den Kolben umgebenden, rohrförmigen Körpers eine vorzugsweise mit einer Dämpfungsplatte versehene Anschlagfläche auf einem an den rohrförmigen Körper anschließenden Flansch aufweist, die mit einer gehäusefesten Gegenfläche eine Endlage des Kolbens bestimmt, wobei im Bereich zwischen der Polfläche des rohrförmigen Körpers und einer mit dieser Polfläche zusammenwirkenden festen Polfläche eine den Luftspalt zwischen diesen Polflächen überbrückende, den magnetischen Fluß leitende Einrichtung in Form eines ferromagnetischen beweglichen und/oder elastisch verformbaren Kurzschlußelementes vorgesehen ist, sodaß der magnetische Fluß zwischen Permanentmagnet,der festen Polfläche, dem Kurzschlußelement und der Polfläche des rohrförmigen Körpers annähernd unbehindert fließt.

Bei diesen sogenannten bistabilen Magneten ist nur für den jeweiligen Umschaltvorgang zwischen den Endlagen Energie erforderlich wodurch der Energieverbrauch sehr gering bleibt. Sowohl in der geöffneten Stellung des Ventils als auch in der geschlossenen Stellung wird der Kolben von einem Permanentmagneten, einer Feder od. dgl., gehalten.

Da die magnetischen Kräfte sehr stark von der Entfernung abhängen, wird der Kolben von herkömmlichen bistabilen Magneten während des Schaltvorganges äußerst stark beschleunigt und prallt daher mit einer relativ großen Geschwindigkeit auf den Permamentmagnet oder auf eine zwischen Permanentmagnet und Kolben befindliche Polplatte auf. Dies verursacht Erschütterungen und eine relativ große Geräuschentwicklung, die oft unerwünscht ist. Um diesen Aufprall zu dämpfen, ist es möglich, den Flansch, der die Anschlagfläche trägt aus Kunststoff auszuführen. Wenn dies nicht ausreicht, kann auch eine zusätzliche Dämpfungsplatte vorgesehen sein.

Andere bekannte bistabile Magnete versuchen dieses Problem dadurch zu vermeiden, daß zwischen Kolben und Magnet bzw. Polplatte eine Platte aus elastischem Material angeordnet ist, die den Stoß beim Aufschlagen dämpft. Dadurch ist zwar im Prinzip das Problem der Geräuschentwicklung in den Griff zu bekommen, jedoch entsteht dabei für die magnetischen Feldlinien ein Spalt, sodaß die Haltekräfte bei dieser Lösung deutlich verringert sind. Bei der erfindungsgemäßen Ausführungsform gewährleistet eine Dämpfungsplatte einen geräuscharmen und erschütterungsfreien Betrieb. Zwischen den Polflächen verbleibt ein Spalt, der von den erforderlichen Schließkräften des Ventiles und den Verschleißzustand der Dämpfungsplatte abhängt, und daher in seiner Größe variieren kann. Dieser Spalt wird jedoch durch die den magnetischen Fluß leitende Einrichtung überbrückt, sodaß eine große Haltekraft gewährleistet ist.

Eine besonders günstige Ausführung ergibt sich, wenn der Kolben in der Endlage, die dem geöffneten Ventil entspricht, vom Permanentmagnet gehalten ist und eine Feder vorgesehen ist, die den Kolben in seiner anderen Endlage hält. Auf diese Weise wird eine Magnetanordnung mit besonders einfachem Aufbau erreicht.

Für das den magnetischen Fluß leitende Kurzschlußelement gibt es verschiedene vorteilhafte Ausführungsvarianten, nämlich als ringförmige Kurzschlußplatte, die in der eingerückten Stellung des Kolbens in eine schräge Lage kippt, als weiche ferromagnetische Spiralfeder, sowie als Kurzschlußbolzen der parallel zur Bewegungsrichtung des Kolbens verschiebbar ist. Bei der praktischen Ausführung kann die für den jeweiligen Anwendungsfall günstigste Ausführungsvariante ausgewählt werden.

Besonders geringe Schaltkräfte werden dadurch erzielt, daß die Membran im wesentlichen kreisförmig ausgebildet ist und daß sie rund um den zentralen Bereich der dem Rand der zu verschließenden Öffnung gegenübersteht, einen ringförmigen Bereich mit geringer Wandstärke aufweist. Der als eigentliches Verschlußorgan dienende zentrale Teil der Membran braucht eine gewisse relativ große Wandstärke, um seine Funktion zufriedenstellend erfüllen zu können. Wird nun die gesamte Membran einheitlich in dieser Wandstärke ausgeführt , so muß der Kolben beim Schließen des Ventils nicht nur die Druckkräfte des Medium überwinden, sondern auch eine beträchtliche Formänderungsarbeit der Membran leisten. Durch die Reduzierung der Dicke der Membran in dem Bereich, der beim Schaltvorgang am meisten verformt wird, kann diese Formänderungsarbeit sehr stark verringert werden. Die aus mechanischen Gründen erforderliche größere Materialstärke im Bereich der Einspannung am Rand der Membran und im Bereich der zu verschließenden Öffnung, bleibt dabei erhalten. Eine Reduzierung der Formänderungsarbeit kann auch dadurch erreicht werden, daß der ringförmige Bereich aus einem weicheren und elastischeren Material als die übrige Membran besteht.

Vorzugsweise ist vorgesehen, daß die Membran zentral ein Verschlußelement zum Verschließen der Öffnung des Ventiles angeformt hat, das druckentlastet ist. Die Druckentlastung kann dabei durch eine Einschnürung zwischen dem Verschlußelement und der übrigen Membran erreicht werden.

Nach einer besonders bevorzugten Ausführungsvariante der Erfindung ist vorgesehen, daß die Betätigungsvorrichtung im Inneren mit einer Flüssigkeit, vorzugsweise Öl, gefüllt ist.

Auf diese Weise ist es möglich, daß beim Schalten keine Druckkräfte zu überwinden sind, wodurch eine besonders kleine Baugröße der Betätigungsvorrichtung und eine besonders energiesparende Betriebsweise erreicht wird. Außerdem wird die Bewegung des Kolbens durch die Ölfüllung gedämpft, was die Geräuschentwicklung weiter herabsetzt.

Im folgenden wird die Erfindung anhand der in den Figuren dargestellten Ausführungsbeispielen näher erläutert.
- Fig. 1: zeigt ein erfindungsgemäßes Ventil samt Betätigungsvorrichtung im Schnitt,
- Fig. 2, 3, 4 und 5: zeigen weitere Ausführungsvarianten der Erfindung im Schnitt bei geöffnetem Ventil und
- Fig. 6: zeigt die Ausführungsvariante von Fig. 5 bei geschlossenem Ventil.
- Fig. 7 bis 11: zeigen verschiedene Ausführungsvarianten der den Luftspalt zwischen den Polflächen überbrückenden, den magnetischen Fluß leitenden Einrichtung.

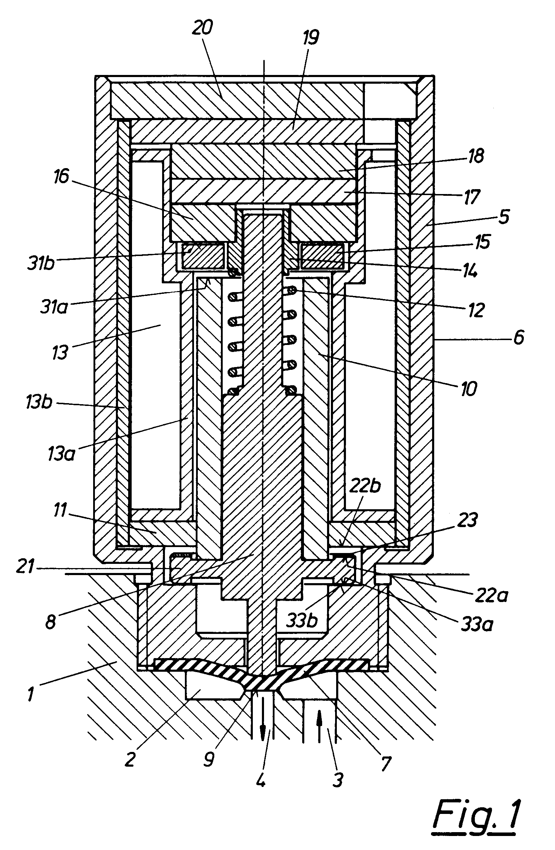

Bei dem in Fig. 1 dargestellten Ventil weist der Grundkörper 1 eine im wesentlichen scheibenförmige Ventilkammer 2 auf, in die eine Zuflußbohrung 3 und eine Abflußbohrung 4 mündet. In den Grundkörper 1 ist das Gehäuse 5 der Betätigungsvorrichtung 6 eingeschraubt. Zwischen dem Grundkörper 1 und dem Gehäuse 5 ist eine flexible Membran 7 eingespannt, die die Ventilkammer 2 gegen die Betätigungsvorrichtung 6 abdichtet. In der Betätigungsvorrichtung 6 ist ein Kolben 8 beweglich angeordnet, der die Membran 7 gegen die Öffnung 9 der Abflußbohrung 4 drücken kann.

Der Kolben 8 ist von einem rohrförmigen Körper 10 umgeben, der aus einem ferromagnetischem Material besteht Der Kolben 8 kann aus Kunststoff gefertigt sein. Der Kolben 8 wird von einer Feder 12 in die Lage gedrückt, die dem geschlossenen Ventil entspricht. Das Umschalten wird mittels eines Elektromagneten 13 bewirkt, der ein Gehäuse 13a, 13b aufweist. An dem vom Ventil entfernten Ende ist in der Betätigungsvorrichtung 6 ein Permanentmagnet 17 vorgesehen, der den Körper 10 des Kolbens 8 entgegen der Wirkung der Feder 12 anzieht. Zwischen dem Kolben 8 samt dem rohrförmigen Körper 10 und dem Permanentmagneten 17 ist eine Polplatte 16 angeordnet, die aus magnetisch leitfähigem Material besteht. Um einen eventuellen Luftspalt zwischen der Polfläche 31a des rohrförmigen Körpers 10 und der Polfläche 31b der Polplatte 16 überbrücken zu können, ist eine magnetisch leitfähige Kurzschlußplatte 15 zwischen diesen Elementen angeordnet, die auf einer Hülse 14 gelagert ist, welche ihrerseits fest mit der Polplatte 16 verbunden ist. Die magnetisch leitfähige Kurzschlußplatte 15 ist auf der Hülse 14 beschränkt beweglich. Auf diese Weise wird erreicht, daß der magnetische Kreis ausgehend vom Permanentmagnet 17 über die Polplatte 18, die Deckplatte 19, das Gehäuse 13b, die Deckplatte 11, den rohrförmigen Körper 10, die magnetisch leitfähige Kurzschlußplatte 15 und die Polplatte 16 geschlossen ist. Der Deckel des Gehäuses 5 ist mit 20 bezeichnet.

Im Bereich des Grundkörpers 1 trägt der Kolben 8 einen Flansch 21, der auf seiner dem Ventil abgewandten Seite eine Anschlagfläche 22a aufweist, auf der eine Dämpfungsplatte 23 befestigt ist. Beim Öffnen des Ventils wird die Bewegung des Kolbens 8 dadurch begrenzt, daß die mit der Dämpfungsplatte 23 versehene Anschlagfläche 22a die Gegenfläche 22b berührt, die auf der Deckplatte 11 der Anschlagfläche 22a gegenüberliegt. Die Deckplatte 11 stützt sich am Gehäuse 13a des Elektromagnets 13 ab. Eine besonders lange Lebensdauer der Membran 7 wird erreicht, wenn die Geometrie der Bauteile so bemessen ist, daß bei geschlossenem Ventil eine weitere fläche 33a des Flansches 21 an einer Schulter 33b des Gehäuses 5 anliegt. Auf diese Weise kann die Verformung der Membran 7 in der Dickenrichtung begrenzt werden.

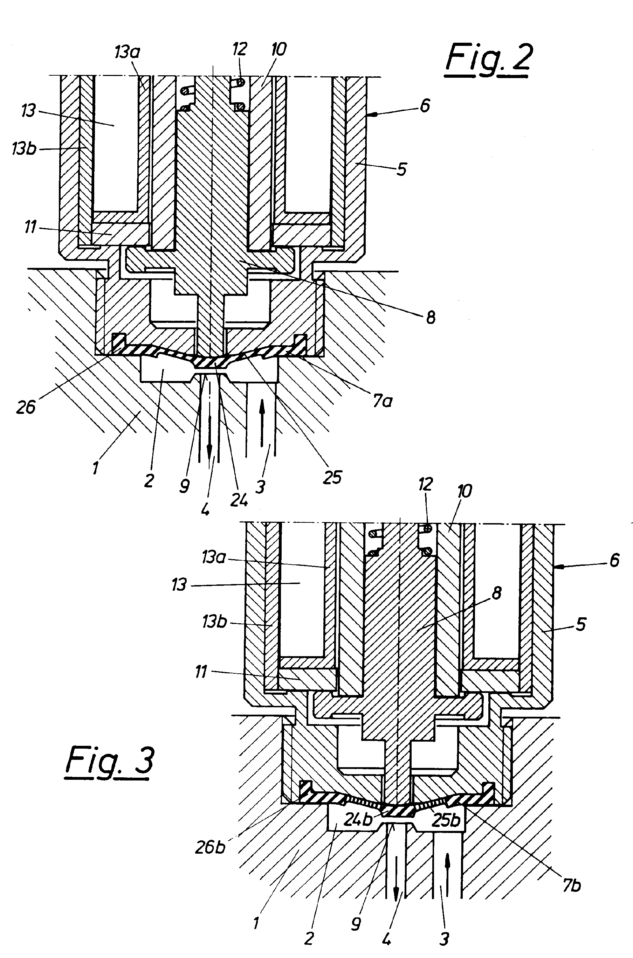

Das in Fig. 2 dargestellte Ausführungsbeispiel unterscheidet sich von dem oben beschriebenen lediglich dadurch, daß die Membran 7a einen zentralen Bereich 24 aufweist, der der Öffnung 9 gegenübersteht und zu ihrem Verschluß dient. Rund um diesen zentralen Bereich 24 ist ein dünnwandiger Bereich 25 vorgesehen, der beim Verschließen des Ventils verformt wird. Rund um diesen dünnwandigen Bereich 25 ist der Einspannbereich 26 vorgesehen, der wiederum eine größere Wandstärke aufweist, um die Abdichtung zwischen Grundkörper 1 und Gehäuse 5 zu gewährleisten.

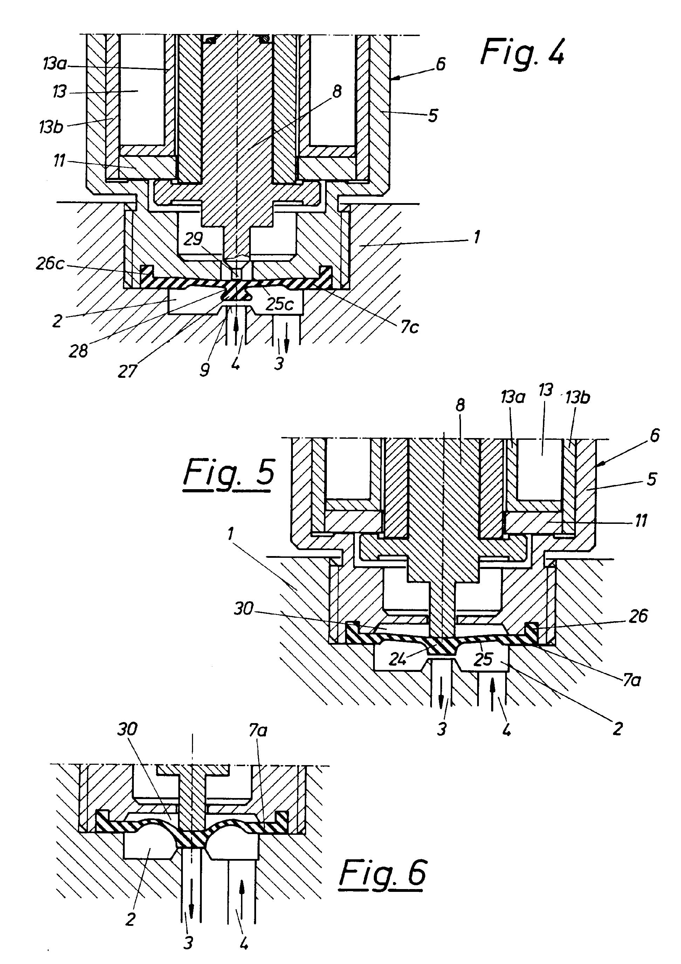

In Fig. 3 ist eine Ausführungsvariante dargestellt, bei der die Membran 7b rund um einen zentralen Bereich 24b, der dickwandig ist und aus einem härteren Material besteht, einen dünnwandigen Bereich 25b aufweist, der zusätzlich eine kleinere Shore-Härte als der zentrale Bereich 24 aufweist. Der Einspannbereich 26b wiederum weist eine größere Shore-Härte auf. Eine solche Membran 7b ist beispielsweise durch ein Zweipolymer-Spritzgußverfahren herstellbar. Die Membran 7c von Fig. 4 ist zur weiteren Reduktion der erforderlichen Schließkräfte zantral mit einem pilzförmigen Körper 27 als Verschlußelement ausgestattet, das durch eine Einschnürung 28 von der übrigen Membran 7c getrennt ist. Diese Einschnürung 28 dient als Druckentlastung, da der Innendruck in der Ventilkammer 2 nur mehr an einer kleinen Fläche angreift. Wesentlich ist, daß der Kolben 8 im Bereich der Membran 7c einen Stempel 29 von vermindertem Querschnitt aufweist.

In Fig. 5 ist ein Ventil dargestellt, dessen Membran 7a vollkommen druckentlastet ist. Die Membran 7a entspricht der des Ausführungsbeispiels, das in Fig. 2 dargestellt ist. Unterschiedlich ist hierbei, daß der Raum 30 hinter der Membran mit einer inkompressiblen Flüssigkeit, beispielsweise Öl, gefüllt ist, wobei durch die Flexibilität der Membran 7a bewirkt ist, daß der Druck im Raum 30 stets gleich ist mit dem im Raum 2 Herrschenden Druck. In der Fig. 5 ist dieses Ventil in geöffnetem Zustand dargestellt. Wird nun der Kolben 8 in die Schließstellung bewegt, verformt sich die Membran 7a entsprechend, um das Druckgleichgewicht zwischen der Kammer 30 und der Ventilkammer 2 aufrechterhalten zu können. In Fig. 6 ist ausschnittsweise dargestellt, wie sich die Membran 7a verformen kann.

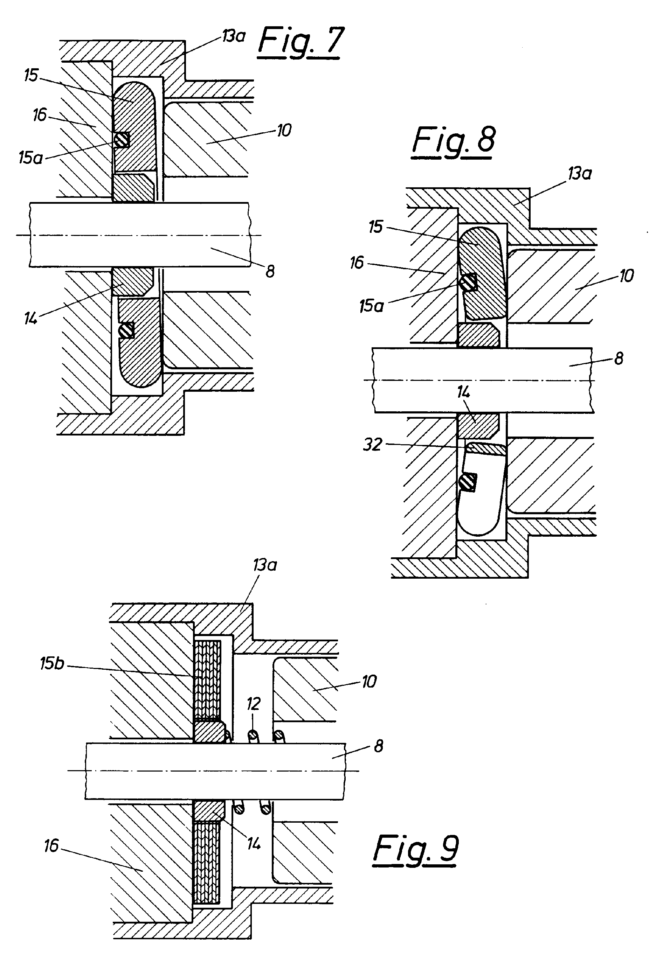

In Fig. 7 ist eine magnetisch leitfähige Kurzschlußplatte 15 im Detail dargestellt. Die magnetisch leitfähige Kurzschlußplatte 15 ist auf einer Hülse 14 zentral gelagert und innerhalb der baulichen Beschränkungen frei beweglich. Wenn nun der Kolben 8 samt rohrförmigem Körper 10 in der geöffneten Stellung des Ventils sich der Polplatte 16 nähert, kippt die magnetisch leitfähige Kurzschlußplatte 15 und stellt eine metallische Verbindung zwischen dem rohrförmigen Körper 10 und der Polplatte 16 her. Dies bewirkt eine deutliche Erhöhung des magnetischen Flusses. In einer Nut der magnetisch leitfähigen Kurzschlußplatte 15 ist ein O-Ring 15a gelagert, der beim Aufprall der magnetisch leitfähigen Kurzschlußplatte 15 auf der Polplatte 16 geräuschdämpfend wirkt. Bei der in Fig. 8 dargestellten Ausführungsvariante ist vorgesehen, daß sich die Magnetkurzschlußplatte 15 unter Wirkung der magnetischen Kräfte verformt, wobei sie eine leicht kegelförmige Stellung einnimmt. Zur leichteren Verformung der Magnetkurzschlußplatte 15 ist eine Anzahl von radialen Schlitzen vorgesehen. Stege 32 gewährleisten den Zusammenhalt der einzelnen durch die Schlitze getrennten Segmente. Es ist auch möglich, die Stege 32 wegzulassen, sodaß die einzelnen Segmente nur durch den O-Ring 15a zusammengehalten werden.

Wie in Fig. 9 dargestellt, kann der magnetische Kontakt auch über ein Paket von Kurzschlußlamellen 15b hergestellt werden, die zwischen der Polplatte 16 und dem rohrförmigen Körper 10 angeordnet sind.

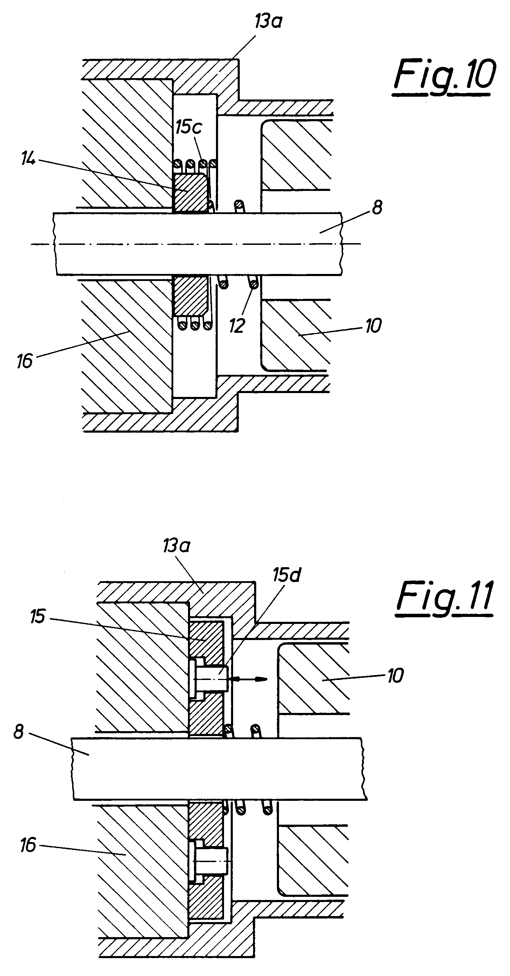

In Fig. 10 ist eine weiche Spiralfeder 15c aus ferromagnetischem Material als Einrichtung zur Leitung des magnetischen Flusses vorgesehen.

In Fig. 11 wird die Übertragung der magnetischen Feldlinien durch Kurzschlußbolzen 15d erreicht, die axial verschieblich sind.

## Patentansprüche

1. Ventil, bestehend aus einer Betätigungsvorrichtung (6), einem beweglichen, elektromagnetisch betätigbaren Kolben (8) mit einer stabilen Endlage und einer Ventilkammer (2) mit einer Öffnung (9) für das durchströmende Medium, welche durch den Kolben (8) verschließbar ist, sowie einer die Ventilkammer (2) gegen die Betätigungsvorrichtung (6) und den beweglichen Kolben (8) völlig abdichtenden im wesentlichen scheibenförmig ausgebildeten flexiblen Membran (7), die gehäusefest an ihrem Umfang eingespannt ist und vom beweglichen Kolben (8) gegen den Rand der Öffnung (9) drückbar ist, **dadurch gekennzeichnet**, daß ein Permanentmagnet (17) vorgesehen ist, der den Kolben (8) in einer zweiten stabilen Endlage hält, wobei dieser Kolben (8) zusätzlich zu einer Polfläche (31a) an einer dem Permanentmagnet (17) zugewandten Stirnseite eines den Kolben (8) umgebenden, rohrförmigen Körpers (10) eine vorzugsweise mit einer Dämpfungsplatte (23) versehene Anschlagfläche (22a) auf einem an den rohrförmigen Körper (10) anschließenden Flansch (21) aufweist, die mit einer gehäusefesten Gegenfläche (22b) eine Endlage des Kolbens (8) bestimmt, wobei im Bereich zwischen der Polfläche (31a) des rohrförmigen Körpers (10) und einer mit dieser Polfläche (31a) zusammenwirkenden festen Polfläche (31b) eine den Luftspalt zwischen diesen Polflächen (31a, 31b) überbrückende, den magnetischen Fluß leitende Einrichtung in Form eines ferromagnetischen beweglichen und/oder elastisch verformbaren Kurzschlußelementes (15; 15c; 15d) vorgesehen ist, sodaß der magnetische Fluß zwischen Permanentmagnet (17) der festen Polfläche (31b), dem Kurzschlußelement (15; 15c; 15d) und der Polfläche (31a) des rohrförmigen Körpers (10) annähernd unbehindert fließt.

2. Ventil nach Anspruch 1, **dadurch gekennzeichnet**, daß der Kolben (8) in der Endlage, die dem geöffneten Ventil entspricht, vom Permanentmagnet (17) gehalten ist und daß eine Feder (12) vorgesehen ist, die den Kolben (8) in seiner anderen Endlage hält.

3. Ventil nach Anspruch 1 oder 2, **dadurch gekennzeichnet**, daß das den magnetischen Fluß leitende Kurzschlußelement als-vorzugsweise ringförmige-Kurzschlupplatte (15) ausgebildet ist, die in der eingerückten Stellung des Kolbens (8) in eine schräge Stellung kippt.

4. Ventil nach Anspruch 1 oder 2, **dadurch gekennzeichnet,** daß das den magnetischen Fluß leitende Kurzschlußelement als weiche ferromagnetische Spiralfeder (15c) ausgebildet ist

5. Ventil nach Anspruch 1 oder 2, **dadurch gekennzeichnet,** daß das den magnetischen Fluß leitende Kurzschlußelement in Form von mindestens einem Kurzschlußbolzen (15d) ausgebildet ist, der parallel zur Bewegungsrichtung des Kolbens verschiebbar ist.

6. Ventil nach einem der Ansprüche 1 bis 5, **dadurch gekennzeichnet,** daß die Membran (7a) im wesentlichen kreisförmig ausgebildet ist und daß sie rund um den zentralen Bereich (24) der dem Rand der zu verschliependen Öffnung (9) gegenübersteht, einen ringförmigen Bereich (25) mit geringer Wandstärke aufweist.

7. Ventil nach einem der Ansprüche 1 bis 5, **dadurch gekennzeichnet**, daß die Membran (7b) im wesentlichen kreisförmig ausgebildet ist und daß sie rund um den zentralen Bereich (24b) der dem Rand der zu verschliependen Öffnung (9) gegenübersteht, einen ringförmigen Bereich (25b) aufweist, der aus einem weicheren und elastischeren Material als die übrige Membran (7b) besteht.

8. Ventil nach einem der Ansprüche 1 bis 7, **dadurch gekennzeichnet**, daß die Membran (7c) zentral ein Verschlußelement (27) zum Verschließen der Öffnung (9) des Ventiles angeformt hat, das druckentlastet ist.

9. Ventil nach Anspruch 8, **dadurch gekennzeichnet**, daß die Druckentlastung durch eine Einschnürung (28) zwischen dem Verschlußelement (27) und der übrigen Membran (7c) ausgebildet ist.

10. Ventil nach einem der Ansprüche 1 bis 7, **dadurch gekennzeichnet**, daß die Betätigungsvorrichtung (6) im Inneren mit einer Flüssigkeit, vorzugsweise Öl, gefüllt ist.

## Claims

1. Valve comprising an actuating device (6), a movable, electromagnetically actuated plunger (8) with a stable extreme position, and a valve chamber (2) with an opening (9) for the medium passing through it, which opening (9) can be closed by means of the plunger (8), and further comprising an essentially disk-shaped flexible membrane (7) completely sealing the valve chamber (2) against the actuating device (6) and the movable plunger (8), which membrane (7) is fitted into the housing along its circumference and may be pressed against the rim of the opening (9) by means of the movable plunger (8), **wherein** a permanent magnet (17) is provided to hold the plunger (8) in a second stable extreme position, said plunger (8) being provided both with a pole face (31a) located at that end of a tubular body (10) around the plunger (8) which faces the permanent magnet (17), and with a stop face (22a) preferably furnished with a damping pad (23), which stop face (22a) is located on a flange (21) in contact with the tubular body (10) and determines one extreme position of the plunger (8) together with a corresponding counter face (22b) in the housing, a device being provided in the area between the pole face (31a) of the tubular body (10) and a fixed pole face (31b) cooperating with the first pole face (31a), for the purpose of bridging the air gap between these pole faces (31a, 31b) and guiding the magnetic flux, which device is configured as a ferromagnetic, movable and/or elastically deformable short-circuit element (15; 15c; 15d), so that the magnetic flux between permanent magnet (17), fixed pole face (31b), short-circuit element (15; 15c; 15d), and pole face (31a) of the tubular body (10) is essentially unimpeded.

2. Valve according to claim 1, **wherein** the plunger (8) is held by the permanent magnet (17) in the extreme position corresponding to the open valve, and wherein a spring (12) is provided which will hold the plunger (8) in its other extreme position.

3. Valve according to claim 1 or 2, **wherein** the short-circuit element guiding the magnetic flux is configured as a preferably ring-shaped short-circuit plate (15) assuming a tilted position when the plunger (8) is in extreme position.

4. Valve according to claim 1 or 2, **wherein** the short-circuit element guiding the magnetic flux is configured as a soft helical spring (15c) of ferromagnetic material.

5. Valve according to claim 1 or 2, **wherein** the short-circuit element guiding the magnetic flux is configured as one or more short-circuit pins (15d) moving parallel to the direction of travel of the plunger (8).

6. Valve according to any of claims 1 to 5, **wherein** the membrane (7a) is essentially circular in shape and has an annular area (25) of reduced thickness around its central part (24) facing the rim of the opening (9) to be closed.

7. Valve according to any of claims 1 to 5, **wherein** the membrane (7b) is essentially circular in shape and has an annular area (25b) of reduced thickness around its central part (24b) facing the rim of the opening (9) to be closed, said annular area (25b) consisting of softer and more flexible material than the rest of the membrane (7b).

8. Valve according to any of claims 1 to 7, **wherein** a closing element (27) for closing the valve opening (9) is provided in the centre of the membrane (7c), which closing element (27) is relieved from pressure.

9. Valve according to claim 8, **wherein** pressure relief is obtained by a constriction (28) between the closing element (27) and the rest of the membrane (7c).

10. Valve according to any of claims 1 to 7, **wherein** the interior of the actuating device (6) is filled with a fluid, preferably oil.

## Revendications

1. Soupape comprenant un dispositif de manoeuvre (6), un piston (8) mobile à commande électromagnétique, ayant une position extrême stable, une chambre de soupape (2) percée d'un orifice (9) de passage du fluide qui peut être obturé par le piston (8), une membrane (7) souple ayant sensiblement la forme d'un disque isolant hermétiquement la chambre (2) par rapport au dispositif de manoeuvre (6) et au piston mobile (8), cette membrane étant fixée par sa périphérie au boîtier et pouvant être appliquée sur le bord de l'orifice (9) par le piston mobile (8), caractérisée en ce qu'il est prévu un aimant permanent (17) maintenant le piston dans une seconde position extrême stable, lequel en complément d'une surface polaire (31a) située sur une face frontale, en regard de l'aimant permanent (17), d'un corps tubulaire (10) entourant le piston (8), comporte une bride (21) au contact de l'extrémité de corps tubulaire (10) et présentant une surface de butée (22a), équipée de préférence d'une plaque d'amortissement (23), définissant avec une contrepartie (22b) solidaire du boîtier une position extrême de piston (8), tandis que la zone comprise entre la surface polaire (31a) du corps tubulaire (10) et la surface polaire fixe (31b) coopérant avec elle est équipée d'un dispositif court-circuitant l'entrefer séparant ces surfaces polaires (31a, 31b), conducteur du flux magnétique et fait d'un élément (15 ; 15c ; 15d) ferromagnétique mobile et/ou déformable, de sorte que le flux magnétique circule pratiquement sans obstacle à travers l'aimant permanent (17) la surface polaire fixe (31b), l'élément court-circuitant (15 ; 15c ; 15d) et la surface polaire (31a) portée par le corps tubulaire (10).

2. Soupape selon la revendication 1, caractérisée en ce que le piston, lorsqu'il occupe sa position extrême correspondant à l'ouverture de la soupape, est maintenu par l'aimant permanent (17) tandis que son maintien dans son autre position extrême est assuré par un ressort (12).

3. Soupape selon la revendication 1 ou 2, caractérisée en ce que l'élément court-circuitant assurant le passage du flux magnétique est constitué de préférence par une plaque annulaire (15) qui, pour la position rentrée du piston (8), se place en oblique.

4. Soupape selon la revendication 1 ou 2, caractérisée en ce que l'élément court-circuitant assurant le passage du flux magnétique est constitué d'un ressort hélicoïdal (15c) fait d'un matériau ferromagnétique doux.

5. Soupape selon la revendication 1 ou 2, caractérisée en ce que l'élément court-circuitant assurant le passage du flux magnétique est constitué par un axe (15d) mobile parallèlement à la direction de déplacement du piston.

6. Soupape selon une des revendications 1 à 5, caractérisée en ce que la membrane (7a) a une forme sensiblement circulaire et présente une épaisseur réduite dans une zone annulaire (25) entourant la partie centrale (24) faisant face au bord de l'orifice (9) à obturer.

7. Soupape selon une des revendications 1 à 5, caractérisée en ce que la membrane (7b) a une forme sensiblement circulaire et dans une zone annulaire (25b) entourant la partie centrale (24) faisant face au bord de l'orifice (9) à obturer, est faite d'un matériau plus souple et plus élastique que le reste de la membrane.

8. Soupape selon une des revendications 1 à 7, caractérisée en ce que la membrane (7c) comporte, en sa partie centrale un élément de forme (27) sans tension, servant à obturer l'orifice (9) de la soupape.

9. Soupape selon la revendication 8, caractérisée en ce que l'élimination de la tension dans l'élément obturateur (27) est due à l'existence d'un rétrécissement (28) entre l'élément (27) et le reste de la membrane (7c).

10. Soupape selon une des revendications 1 à 7, caractérisée en ce que le dispositif de manoeuvre (6) est rempli d'un liquide, de l'huile de préférence.
